Europäisches Patentamt

European Patent Office

Office européen des brevets

(11) Numéro de publication: **0 431 303 A1**

## DEMANDE DE BREVET EUROPEEN

(21) Numéro de dépôt: 90120634.2

(22) Date de dépôt: 27.10.90

(51) Int. Cl.⁵: **H02G 1/08**

(30) Priorité: 09.11.89 FR 8914824

(43) Date de publication de la demande:
**12.06.91 Bulletin 91/24**

(84) Etats contractants désignés:
**DE ES GB IT**

(71) Demandeur: **MACC**
**Zone Industrielle du Sanital**
**F-86104 Chatellerault Cédex(FR)**

(72) Inventeur: **Tarroux, Jean-Pierre**
**12 Impasse Francois Fabie**
**F-12400 Saint Affrique(FR)**

(54) **Appareil destiné à enfiler les conducteurs dans les conduits pour canalisations électriques.**

(57) L'invention concerne un appareil permettant à un opérateur de passer, seul, des conducteurs ou câbles dans un conduit aiguillé pour canalisations électriques.

Cet appareil tire-fils est équipé d'un dispositif "marche-arrêt" déclenché directement (c'est-à-dire sans commande à distance) sous la poussée des conducteurs dans le conduit et arrêté (toujours sans commande à distance) en fonction de l'importance de la tension des conducteurs engagés dans le conduit.

A la sortie des conducteurs du conduit, l'arrêt de l'appareil est immédiat et sans intervention de l'opérateur.

EP 0 431 303 A1

La présente invention a pour but de permettre à un opérateur de passer, seul, des conducteurs dans un conduit aiguillé pour canalisations électriques. Les moyens connus concernent des appareils tire-fils et/ou câbles équipés, dans la majorité des cas, d'un dispositif "marche-arrêt" actionné par une commande à distance du type commande au pied, télécommande, etc...

La présente invention concerne un appareil tire-fils équipé d'un dispositif "marche-arrêt" déclenché directement (c'est-à-dire sans commande à distance) sous la poussée des conducteurs dans le conduit et arrêté (toujours sans commande à distance) en fonction de l'importance de l'effort de traction des conducteurs engagés dans le conduit.

Pour permettre une meilleure compréhension de ce qui va suivre, il est utile de savoir que pour passer des conducteurs dans un conduit pour canalisations électriques deux actions simultanées sont nécessaires :

1. A l'entrée des conduits, une action de "poussée" des conducteurs exercée manuellement par l'opérateur,

2. A la sortie du conduit, un effort de traction de l'aiguille au bout de laquelle sont attachés les conducteurs.

Dans la présente invention, la traction de l'aiguille et des conducteurs est assurée au moyen d'un appareil composé d'un bloc de traction articulé sur son support et maintenu écarté par rapport à ce dit support au moyen d'un ressort de compression.

Lorsque l'effort nécessaire à la traction de l'aiguille augmente et dépasse une valeur déterminée, le bloc de traction se rabat sur son support en comprimant le ressort ainsi qu'un contacteur électrique. Ce contacteur comprimé coupe l'alimentation en électricité du bloc de traction provoquant son arrêt immédiat. Le redémarrage de l'appareil exige alors la diminution de l'importance de l'effort de traction de l'aiguille ; celle-ci est obtenue par la simple poussée des conducteurs exercée manuellement par l'opérateur à l'entrée du produit.

Cette force de poussée, conjuguée à la force développée par le ressort comprimé, fait écarter le bloc de traction de son support, libérant ainsi le contacteur électrique et, par conséquent, l'alimentation en électricité de l'appareil. Le moto-réducteur se remet alors en marche pour tracter l'aiguille par enroulement sur le tambour.

La liaison des conducteurs, en bout de l'aiguille, donne naissance à une protubérance. Lorsque cette protubérance arrive en sortie du conduit, elle vient, obligatoirement, buter sur le support du bloc de traction, ce qui provoque une résistance à la traction telle que l'alimentation électrique est automatiquement interrompue dans les conditions expliquées plus haut.

Dans ce cas, l'opérateur va continuer sa poussée manuelle des conducteurs à l'entrée du conduit (entrée souvent située dans une autre pièce). Cette poussée ne produisant pas à elle seule la réalimentation électrique de l'appareil, il comprendra que l'opération consistant à tirer les conducteurs jusqu'à la sortie du conduit est totalement accompli.

L'un des avantages d'un tel dispositif réside dans sa simplicité de réalisation mécanique d'où découle un prix de revient réduit et une très grande fiabilité de fonctionnement.

Un tel appareil permet à l'opérateur de travailler seul, même si les extrémités des conduits sont situées dans des pièces différentes avec ou sans visibilité entre le point d'entrée et le point de sortie du conduit pour canalisations électriques.

La force de traction de l'appareil est limitée à une valeur très nettement inférieure à celle pouvant occasionner la rupture de l'aiguille à laquelle sont attachés les conducteurs. Tout effort de résistance trop élevé a donc pour but de faire basculer le bloc de traction sur son support, de comprimer le ressort et de provoquer la coupure d'alimentation, la remise en fonctionnement étant assurée sous la simple poussée d'accompagnement des fils conducteurs par un opérateur à l'entrée du conduit.

On comprend donc que l'opérateur peut aisément, et à tout instant, arrêter le fonctionnement de l'appareil en n'exerçant plus aucune poussée des conducteurs, ou encore, en coudant les conducteurs à l'entrée du conduit. Pour un conduit non aiguillé, l'opérateur utilise alors une aiguille spéciale et suffisamment rigide pour être enfilée dans le conduit.

Le tambour de l'appareil est conçu de façon à recevoir cette dite aiguille. Le coulissement du support de l'appareil sur une échelle télescopique permet de le positionner d'une façon rigide et précise à la sortie des conduits, soit en appui sur un mur ou sur le sol. L'utilisation au sol permet, entre autres, l'équipement des conduits (pré-équipés en atelier) du type "araignée".

La figure 1 montre l'appareil vu de côté en appui sur une cloison ou un mur.

La figure 2 montre l'appareil, vu de côté, avec l'aiguille reliée au tambour.

La figure 3 montre l'appareil, en position arrêt, (le ressort comprimé et la biellette du contacteur en position de coupure).

La figure 4 est une vue de face, montrant l'intérieur du bloc de traction.

La figure 5 montre l'appareil en fin de passage des conducteurs dans le conduit.

La figure 6 montre l'appareil en position hozirontale, pour utilisation en sortie des conduits par le plancher ou pour le pré-équipement des conduits en atelier.

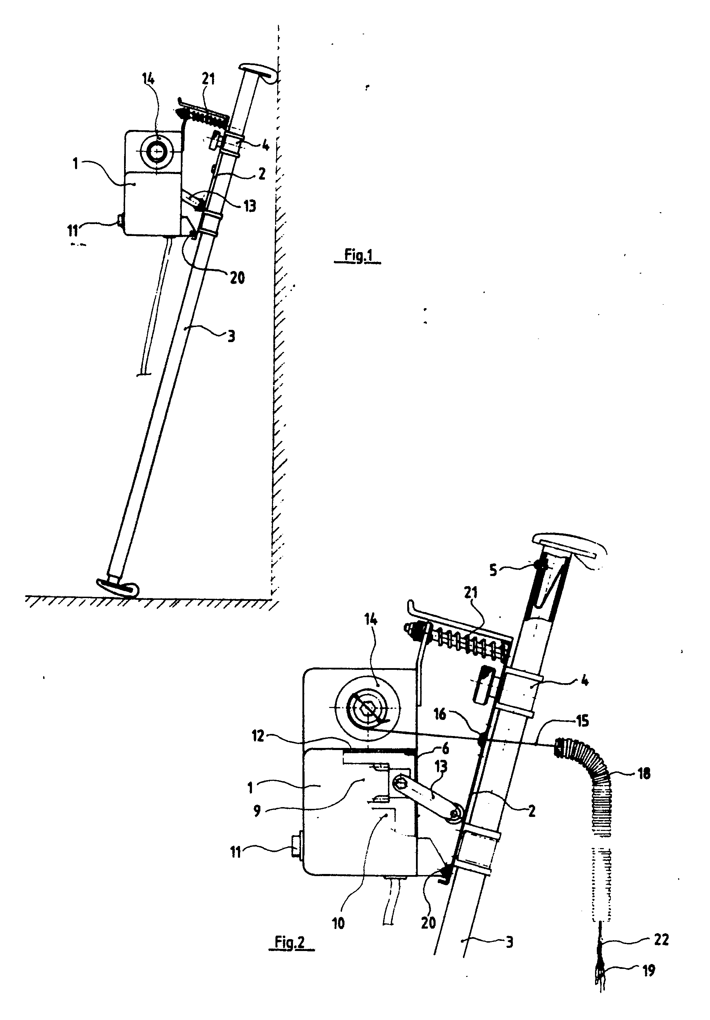

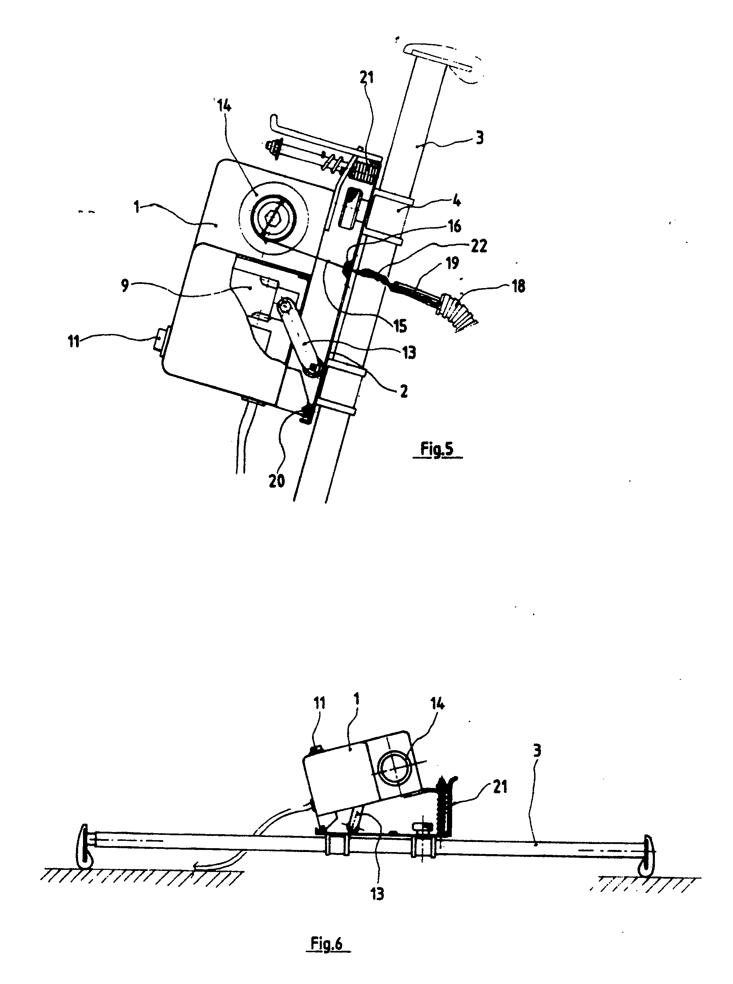

L'ensemble montré aux figures 1, 2, 3, 4, 5 et 6 est un exemple de réalisation de l'invention.

Le bloc de traction (1) est articulé sur son support (2), lui-même réglable en position sur une échelle télescopique (3) par l'intermédiaire d'un collier de serrage (4).

L'échelle télescopique (3) est composée de deux éléments coulissant l'un dans l'autre et blocables à certaines positions par des doigts de verrouillage (5).

Suivant les figures 2 et 4, le bloc de traction (1) est constitué d'une platine (6) sur laquelle sont fixés un moto-réducteur (7), un redresseur (8), un contacteur (9), un transformateur (10) et un interrupteur d'alimentation générale manuel (11). L'ensemble étant habillé d'un capotage (12).

La platine (6) est articulée sur le support (2) autour d'un axe (20). Cette même platine (6) est maintenue écartée du support (2) par un ressort de compression (21).

Le contacteur (9) fixé sur la platine (6) possède une biellette (13) qui vient prendre appui sur le support (2).

Suivant la figure 4, en bout d'arbre de sortie du moto-réducteur (7) est fixé un tambour (14) sur lequel vient s'enrouler l'aiguille (15).

Cette aiguille (15) (soit équipant déjà le conduit, soit mise en place par l'opérateur), après être passée au travers de la fente (16) du support (2) est attachée ou pincée sur le tambour (14).

Suivant cette même figure 4, le flasque démontable (17) du tambour (14) permet l'extraction de l'aiguille (15) enroulée sur celui-ci.

Cette opération est facilitée par le moyeu conique du tambour (14).

Suivant la figure 2, l'aiguille (15) équipant le conduit (18) s'enroule sur le tambour pour tracter les conducteurs (19) attachés à son autre extrémité en (22).

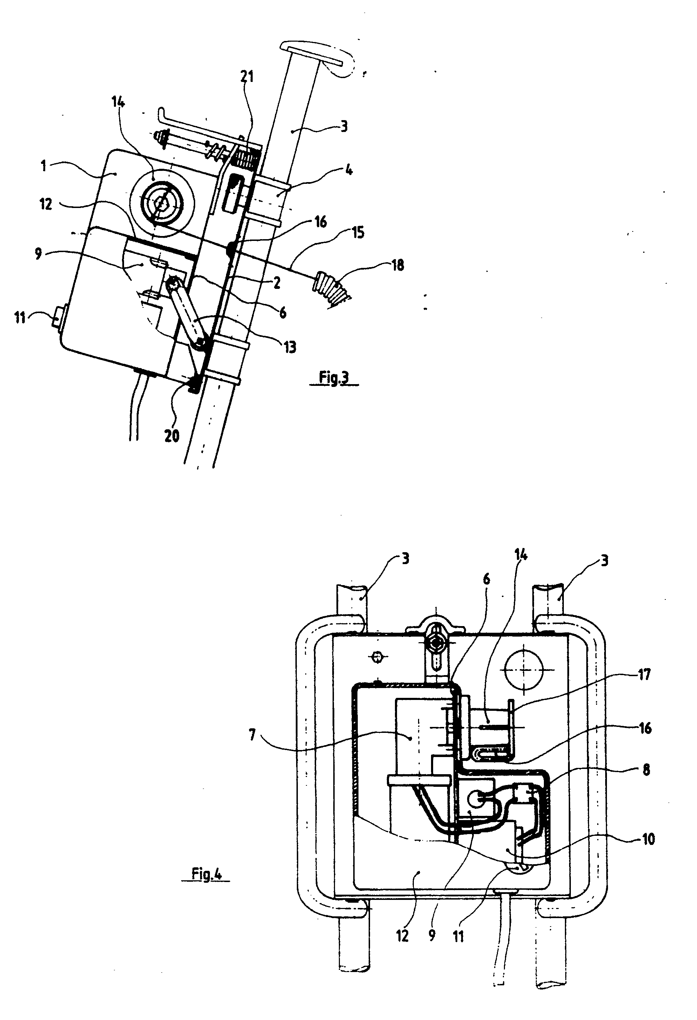

Suivant la figure 3, l'appareil préalablement mis sous tension au moyen de l'interrupteur (11) fait que l'aiguille (15) s'enroule sur le tambour (14). Si l'effort de traction de l'aiguille augmente, le bloc de traction (1) articulé autour de l'axe (20) vient se rabattre sur le support (2) comprimant le ressort (21) et la biellette du contacteur (9). Cette action a pour effet de couper le contact électrique : le moto-réducteur (7) s'arrête.

L'opérateur placé à l'entrée du conduit où doivent s'engager les conducteurs exerce une poussée sur ceux-ci. Cette poussée, conjuguée à l'effort du ressort (21) a pour résultat de faire écarter le bloc de traction (1) du support (2). Le contacteur (9) est alors libéré, rétablissant ainsi le contact électrique et le redémarrage de l'appareil (position représentée figure 2). L'enfilage des conducteurs dans le conduit est donc une conjugaison en continu des deux opérations décrites ci-dessus.

L'opérateur, soit en arrêtant la poussée, soit en créant un obstacle en coudant les conducteurs (19) peut faire cesser à son gré la progression des conducteurs (19) dans le conduit (18).

En fin de passage dans le conduit, la protubérance (22) créée par la liaison de l'aiguille (15) et des conducteurs (19) vient buter à l'entrée de la fente (16) dont la dimension permet exclusivement le passage de l'aiguille. La résistance ainsi offerte provoque le basculement du bloc de traction (1) sur le support (2), comprimant le contacteur (9) qui coupe l'alimentation.

La poussée de l'opérateur devient alors inopérante, signifiant ainsi la sortie des conducteurs (19) à l'autre extrémité du conduit (18).

**Revendications**

1. Appareil destiné à enfiler les conducteurs dans les conduits pour canalisations électriques, composé d'un bloc de traction (1), comportant une platine (6) supportant un moto-réducteur (7), équipé d'un tambour (14), d'un contacteur (9) et sa biellette (13) caractérisé en ce que ladite platine (6) articulée en sa partie inférieure autour de l'axe (20) solidaire du support (2) permet soit au ressort (21) détendu, placée en sa partie supérieure, de maintenir le bloc de traction écarté de son support (position permettant l'alimentation électrique de l'appareil nécessaire à son fonctionnement) ; soit sous l'effet d'un effort de traction trop important de l'aiguille (15), la compression du dit ressort (21) provoquant le basculement de la biellette (13) du contacteur (9) ce qui coupe alors l'alimentation électrique et arrête donc l'appareil.

2. Appareil destiné à enfiler les conducteurs dans les conduits pour canalisations électriques, suivant revendication 1, caractérisé en ce que le support (2) comporte une fente (16) dimensionnée pour le passage exclusif et le guidage de l'aiguille (15) avant son enroulement sur le tambour (14).

3. Appareil destiné à enfiler les conducteurs dans les conduits pour canalisations électriques, suivant revendications 1 et 2, caractérisé en ce que le support (2) peut être déplacé et immobilisé sur toute la longueur d'une échelle télescopique (3) de façon à pouvoir placer l'appareil face à la sortie du conduit destiné à recevoir les conducteurs.

Fig.1

Fig.2

4

Fig.3

Fig.4

Fig.5

Fig.6

6

# RAPPORT DE RECHERCHE EUROPEENNE

**EP 90 12 0634**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 497 470   (W.M. CARTER ET AL.)<br>* colonne 1, ligne 56 - colonne 3, ligne 1; figures 1-6 *<br>— — — | 1 | H 02 G<br>1/08 |
| A | FR-A-2 537 795   (G. KOHLER)<br>* revendications 1, 7, 9; figures 1-5 *<br>— — — | 1,3 | |
| A | US-A-4 609 181   (W.C. FISHER ET AL.)<br>* colonne 4, ligne 48 - colonne 5, ligne 12; figures 1, 2 *<br>— — — — — | 1 | |

|  |
|---|
| DOMAINES TECHNIQUES RECHERCHES (Int. Cl.5) |
| H 02 G |

Le présent rapport de recherche a été établi pour toutes les revendications

| Lieu de la recherche | Date d'achèvement de la recherche | Examinateur |
|---|---|---|
| La Haye | 22 janvier 91 | LOMMEL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
--------------------------------------------------
& : membre de la même famille, document correspondant